# EUROPÄISCHE PATENTANMELDUNG

(11) **EP 0 727 865 A1**
(43) Veröffentlichungstag der Anmeldung: **21.08.1996**
(21) Anmeldenummer: 96101676.3
(22) Anmeldetag: 06.02.1996
(51) Int. Cl.: H02K 5/04, H02K 5/15

(54) **Elektrische Maschine**

(30) Priorität: 16.02.1995 DE 29502564 U
(71) Anmelder: SIEMENS AKTIENGESELLSCHAFT, 80333 München (DE)
(72) Erfinder: Demmer, Achim, Dipl.-Ing., D-97688 Bad Kissingen (DE); Lipot, Hans-Werner, Dipl.-Ing. (FH), D-97616 Bad Neustadt (DE)

(57) **Zusammenfassung**

Die Erfindung betrifft eine elektrische Maschine, deren Läuferwelle (5) in Lagern (6) drehbar gelagert ist, die ihrerseits in den Lagerschildern (2) angeordnet sind, welche an den Stirnseiten des Maschinengehäuses (1) angebaut werden. Die Läuferwelle (5) ragt mit ihrem Ende über das entsprechende Lager (6) hinaus. An diesem Wellenende ist ein Gebergerät (11) angebaut. Das geberseitige Lagerschild (2) ist von seinem Anschlußflansch (3) am Maschinengehäuse (1) aus zu seiner Nabe (4) hin konisch in den Innenraum des Maschinengehäuses (1) geneigt und ragt in das Maschinengehäuse hinein. Dadurch findet das Gebergerät (11) in der durch die konische Neigung an der Außenseite des Lagerschildes (2) gebildeten Mulde (10) am Ende der Läuferwelle (5) Platz, ohne daß die Baulänge der Maschine vergrößert werden muß.

## Beschreibung

Die Erfindung betrifft eine elektrische Maschine gemäß dem Oberbegriff des Anspruchs 1.

Eine solche Maschine ist durch das DE-U-76 21 629 bekannt. Bei dieser bekannten Maschine ist auf der einen Stirnseite außerhalb des Lagerschildes ein Tachogenerator als Gebergerät angebaut und mit der Lauferwelle der Maschine verbunden. Durch einen derartigen Anbau wird somit der Raumbedarf für die Maschine in axialer Richtung wesentlich vergrößert.

Der Erfindung liegt die Aufgabe zugrunde, die axiale Baulänge einer mit einem angebauten Gebergerät versehenen elektrischen Maschine möglichst klein zu halten.

Die Lösung der gestellten Aufgabe gelingt nach der Erfindung dadurch, daß das geberseitige Lagerschild von seinem Anschlußflansch am Maschinengehäuse aus zu seiner Nabe hin konisch geneigt in den Innenraum des Maschinengehäuses ragend ausgebildet ist und das Gebergerät in der durch die konische Neigung an der Außenseite des Lagerschildes gebildeten Mulde angeordnet ist. Durch eine solche Ausbildung des Lagerschildes wird der innerhalb des Wickelkopfes liegende Raum genutzt und damit die axiale Baulänge der Maschine trotz des angebauten Gebergerätes kaum oder gar nicht vergrößert.

Zur axialen Verkürzung der Baulänge trägt ferner bei, daß die Nabe nach innen in das Maschinengehäuse vorspringend an dem Lagerschild angeformt ist.

Ein mechanischer Schutz für das Gebergerät wird dadurch erreicht, daß die Mulde mittels eines an dem Lagerschild befestigbaren Deckels verschlossen ist.

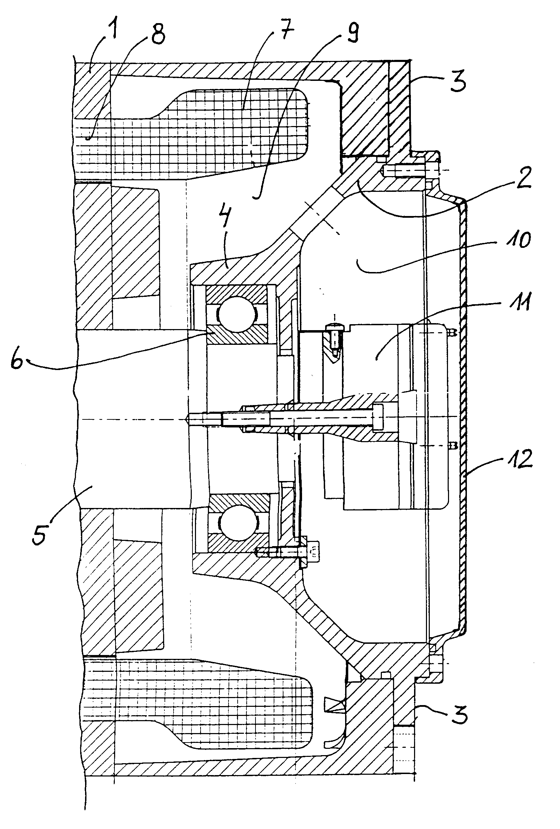

Anhand eines in der Zeichnung dargestellten Ausführungsbeispieles wird die Erfindung nachfolgend näher beschrieben.

Mit 1 ist das Gehäuse einer elektrischen Maschine bezeichnet. An diesem Gehäuse 1 ist ein Lagerschild 2 mit seinem Anschlußflansch 3 befestigt. Der Lagerschild 2 ist zu seiner Nabe 4 hin, in der ein der Lagerung der Läuferwelle 5 dienendes Kugellager 6 angeordnet ist, konisch geneigt ausgebildet, so daß der Lagerschild 2 in den vom Wickelkopf 7 der Ständerwicklung 8 umschlossenen Raum 9 ragt. Damit befindet sich die Lagerstelle der Läuferwelle 5 axial innerhalb des Maschinengehäuses 1.

Durch die nach innen konisch geneigte Form des Lagerschildes 2 ist an dessen Außenseite eine Mulde 10 gebildet, in der ein mit der Läuferwelle 5 direkt gekoppeltes und von dieser angetriebenes Gebergerät 11, beispielsweise ein Tachogenerator, angeordnet ist. Die Mulde 10 ist mittels eines Deckels 12, der durch eine Schraubverbindung am Lagerschild 2 gehalten ist, verschlossen. Damit ist das Gebergerät 11 vollkommen geschützt.

Trotz des axialen Anbaus des Gebergerätes 11 an dem einen freien Ende der Läuferwelle 5 ergibt sich bei dieser Maschine nur eine geringfügige oder gar keine Verlängerung der axialen Baulänge der Maschine insgesamt.

## Patentansprüche

1. Elektrische Maschine, deren Läuferwelle (5) mittels in der Nabe (4) von an den Stirnseiten des Maschinengehäuses (1) angebauten Lagerschilden (2) angeordneter Lager (6) drehbar gelagert ist und an deren einem durch das entsprechende Lager (6) nach außen geführten Wellenende ein Gebergerät (11) angebaut ist,
**dadurch gekennzeichnet**,
daß das geberseitige Lagerschild (2) von seinem Anschlußflansch (3) am Maschinengehäuse (1) aus zu seiner Nabe (4) hin konisch geneigt in den Innenraum des Maschinengehäuses (1) ragend ausgebildet ist und das Gebergerät (11) in der durch die konische Neigung an der Außenseite des Lagerschildes (2) gebildeten Mulde (10) angeordnet ist.

2. Maschine nach Anspruch 1,
**dadurch gekennzeichnet**,
daß die Nabe (4) nach innen in das Maschinengehäuse (1) vorspringend an dem Lagerschild (2) angeformt ist.

3. Maschine nach Anspruch 1 oder 2,
**dadurch gekennzeichnet**,
daß die Mulde (10) mittels eines an dem Lagerschild (2) befestigbaren Deckels (12) verschlossen ist.
